# EUROPÄISCHE PATENTSCHRIFT

(11) **EP 3 288 892 B1**
(45) Veröffentlichungstag und Bekanntmachung des Hinweises auf die Patenterteilung: **02.09.2020**
(21) Anmeldenummer: 16721667.0
(22) Anmeldetag: 19.04.2016
(51) Int. Cl.: C01B 17/66, D21C 9/10, D06L 4/13, D06L 4/30, D06P 1/647, D06P 1/673

(54) **STABILISIERUNG VON NATRIUMDITHIONIT MIT DIVERSEN ADDITIVEN**
STABILIZATION OF SODIUM DITHIONITE WITH DIVERSE ADDITIVES
STABILISATION DE DITHIONITE DE SODIUM À L'AIDE DE DIVERS ADDITIFS

(30) Priorität: 29.04.2015 EP 15165621
(43) Veröffentlichungstag der Anmeldung: 07.03.2018
(73) Patentinhaber: BASF SE, 67056 Ludwigshafen am Rhein (DE)
(72) Erfinder: BECKMANN, Eberhard, 67435 Neustadt (DE); WEIGUNY, Sabine, 67251 Freinsheim (DE); GÄRTNER, Martin, 67549 Worms (DE); FEDERSEL, Katharina, 69124 Eppelheim (DE)
(74) Vertreter: BASF IP Association
(86) Internationale Anmeldenummer: PCT/EP2016/058612
(87) Internationale Veröffentlichungsnummer: WO 2016/173884

(56) Entgegenhaltungen:
- DE-A1- 2 041 566
- DE-A1- 2 107 959
- DE-A1- 2 657 329
- US-A- 3 669 895

## Beschreibung

Die vorliegende Erfindung betrifft ein Verfahren zur Verminderung oder Verhinderung der Zersetzung einer Zusammensetzung Z enthaltend ein Salz der dithionigen Säure wie in den Ansprüchen definiert sowie die Verwendung der Zusammensetzung Z, wie in den Ansprüchen definiert.

Es ist bekannt, dass sich beispielsweise Natriumdithionit (Na₂S₂O₄) oder Produkte die beispielsweise Natriumdithionit (Na₂S₂O₄) enthalten bei höherer Temperatur von ca. 80 °C und/oder Anwesenheit von Wasser oder Protonensäuren spontan und heftig zersetzen können, wobei unter anderem Schwefeldioxid freigesetzt wird was auch sicherheitstechnisch nicht erwünscht ist. Auch bei Umgebungstemperatur von ca. 20 °C kann eine langsame Zersetzung von beispielsweise Natriumdithionit stattfinden, was sich beispielsweise durch unerwünschten Schwefeldioxidgeruch von geöffneten Gebinden eines Natriumdithionit-haltigen Handelsprodukts bemerkbar machen kann. Als Konsequenz der genannten Zersetzung sinkt üblicherweise der Dithionitgehalt des Produktes und damit in der Regel auch dessen Qualität, beispielsweise Reduktionskraft. Außerdem kann es zu Verbackungen und Verklumpungen des Produkts kommen, die eine Dosierung bei der Weiterverarbeitung erschweren. Es ist auch möglich, dass sich bei der Zersetzungsreaktion des Salzes der dithionigen Säure und/oder eines diesem zugesetzten Additives (beispielsweise Soda) Gase bilden die zum Druckaufbau in den verschlossenen Gebinden, die beispielsweise Natriumdithionit (Na₂S₂O₄) enthalten, führt. Alle diese nachteiligen Effekte können gemeinsam oder unabhängig voneinander auftreten.

Um diese Nachteile abzustellen oder zumindest zu vermindern, wurde bereits vorgeschlagen insbesondere Natriumdithionit diverse Stoffe, beispielsweise Bariumoxid oder Calciumoxid, zuzusetzen, wie zum Beispiel in US 5,296,210 (Hoechst Celanese Corporation), Spalte 1, Zeile 51 bis Spalte 2, Zeile 58 und der darin genannten Literatur zu entnehmen ist, oder kalzinierte Soda und Diethylentriaminpenta-Natrium-Acetat zuzusetzen wie DE 21 07 959 A1 (BASF Aktiengesellschaft) zu entnehmen ist oder beispielsweise Natriumcarbonat, Natriumtriphosphat und ein Natriumsalz einer Alkansäure oder Benzoesäure zuzusetzen, wie DE 26 57 329 A1 (Diamond Shamrock Corp.) zu entnehmen ist.

Das Problem der Zersetzungsneigung und der damit üblicherweise verbundenen, oben beschriebenen Verbackungs-, Geruchs- und Druckaufbauproblematik der im Stand der Technik genannten Dithionite ist nach wie vor noch nicht optimal gelöst, so dass hier noch Raum für Verbesserungen ist.

Der vorliegenden Erfindung liegt daher die Aufgabe zugrunde, gegen Zersetzung stabilere Salze der dithionigen Säure, insbesondere Natriumdithionit, zur Verfügung zu stellen, so dass beispielsweise dithionithaltige Produkte ohne signifikanten Abbau des Dithionit-Wirkstoffgehalts längere Zeit und/oder unter erhöhter Temperatur und/oder Luftfeuchtigkeit sicherer transportiert und/oder gelagert werden können und die oben beschriebenen Verbackungs-, Geruchs- und Druckaufbauprobleme zumindest zum Teil reduziert oder beseitigt werden.

Die Aufgabe wurde mit dem vorliegenden Verfahren gelöst.

Salze Z1 der dithionigen Säure (H₂S₂O₄) - die Säure selbst wurde bisher noch nicht isoliert - sind hierin alle Metallsalze oder substituierten (NR₄⁺) oder unsubstituierten (NH₄⁺) Ammoniumsalze dieser Säure, beispielsweise die Alkalimetallsalze, Erdalkalimetallsalze, Salze der Metalle der Gruppe 12 des Periodensystems der Elemente, sowie Ammonium (NH₄⁺)- Salze.

Bevorzugte Salze der dithionigen Säure Z1 sind hierin Natriumdithionit (Na₂S₂O₄), Kaliumdithionit (K₂S₂O₄), Calciumdithionit (CaS₂O₄), Zinkdithionit (ZnS₂O₄), Ammoniumdithionit ((NH₄)₂S₂O₄), ganz besonders bevorzugt ist Natriumdithionit (Na₂S₂O₄). Diese und andere Dithionite werden in der Fachwelt und hierin auch als "Hydrosulfit(e)" bezeichnet.

Salze der dithionigen Säure Z1, inklusive der oben bevorzugten, umfassen die reine Verbindung, besonders bevorzugt reines Natriumdithionit (Na₂S₂O₄), aber auch Zusammensetzungen enthaltend ein Salz der dithionigen Säure, besonders bevorzugt Natriumdithionit (Na₂S₂O₄), welche weitere Nebenbestandteile einzeln oder in beliebiger Kombination enthalten können, zum Beispiel Wasser, auch in Form von Kristallwasser, beispielsweise Natriumdithionit-Dihydrat Na₂S₂O₄ x 2 H₂O, Alkohole, Sulfite (SO₃²⁻), Disulfite (S₂O₅²⁻), Thiosulfate (S₂O₃²⁻), Formiate (HCOO-) und weitere schwefelhaltige, organische und anorganische Komponenten, wobei die Gesamtmenge dieser Nebenbestandeile üblicherweise im Bereich von 0,0001 bis 20 Gew.-%, bezogen auf die Komponente Z1, liegt. Die genannten Nebenbestandteile sind üblicherweise, insbesondere für den Fall des Natriumdithionits, das Resultat des Herstellprozesses für das Salz der dithionigen Säure.

Ein besonders bevorzugtes Salz der dithionigen Säure hierin ist das Natriumdithionit (Na₂S₂O₄) bzw. Na₂S₂O₄ x 2 H₂O, das beispielsweise in Ullmann's Encyclopedie of Industrial Chemistry, Wiley-VCH Verlag GmbH & Co. KGaA, Weinheim, 20102, Seiten 701 bis 704 (DOI: 10.1002/14356007.a25_477), hierin mit "Ullmann" bezeichnet, beschrieben wird und beispielsweise als Natriumdithionit-Produkt von BASF SE unter den Namen Blankit® oder Blankit®S in den Handel gebracht wird.

Natriumdithionit kann auf diversen Wegen kommerziell hergestellt werden, beispielsweise mit dem sogenannten Formiatverfahren. Näheres siehe in Ullmann, DE 1592013 A oder DE 27 03 282 A.

Die Zusammensetzung Z enthält das wie oben, inklusive aller Ausführungsformen, beschriebene Salz der dithionigen Säure Z1, insbesondere Natriumdithionit, in einer Menge im Bereich von 50 bis 100 Gew.-%, vorzugsweise im Bereich von 70 bis 95 Gew.-%, jeweils bezogen auf die Zusammensetzung Z.

Die Zusammensetzung Z kann darüber hinaus ein Additiv Z2, enthalten, vorzugsweise ausgewählt aus der Gruppe bestehend aus Alkalimetallcarbonat, Erdalkalimetallcarbonat, besonders bevorzugt praktisch kristallwasserfreies Natriumcarbonat (Na₂CO₃), Alkalimetall- oder Erdalklimetalltripolyphosphat (Na₅P₃O₁₀), Alkalimetall- oder Erdalkalimetallsulfit, -disulfit oder -sulfat, Dextrose, Komplexbildner beispielsweise Ethylendiamintetraessigsäure (C₁₀H₁₆N₂O₈) oder ihre Salze oder Nitrilotriessigsäure (C₆H₉NO₆) oder ihre Salze in einer Gesamtmenge im Bereich von 0,0001 bis 40 Gew.-%, vorzugsweise 0,0001 bis 10 Gew.-%, besonders bevorzugt 1 bis 5 Gew.-%, jeweils bezogen auf die Zusammensetzung Z.

Die Verbindungen V werden ausgewählt aus der Gruppe bestehend aus:
(a) Oxiden der Alkalimetalle Lithium, Natrium, Kalium, Rubidium, Cäsium, wie Li₂O, Na₂O, K₂O oder des Magnesiums, wie MgO, vorzugsweise Lithiumoxid Li₂O, Natriumoxid Na₂O, Magnesiumoxid MgO;
(b) Natriumtetrahydroborat (NaBH₄);
(c) wasserfreies Kupfer(II)sulfat (Cu(SO₄)), Phosphorpentoxid und
(d) Basische Aminosäuren Arginin, Lysin, Histidin, vorzugsweise Arginin, Lysin.

Die Summe der die Zusammensetzung Z bildenden Komponenten ist 100 %.

Eine Ausführungsform (I) der Zusammensetzungen Z, besonders bevorzugt enthaltend Natriumdithionit Z1, enthält kein Additiv Z2.

Eine weitere Ausführungsform (II) der Zusammensetzungen Z, besonders bevorzugt enthaltend Natriumdithionit Z1, enthält ein Additiv Z2, vorzugsweise ausgewählt aus der Gruppe bestehend aus Alkalimetall- oder Erdalkalimetallcarbonat, besonders bevorzugt praktisch kristallwasserfreies Natriumcarbonat (Na₂CO₃), Alkalimetall- oder Erdalklimetalltrispolyphosphat (Na₅P₃O₁₀), Alkalimetall- oder Erdalkalimetallsulfit, -disulfit oder -sulfat, Dextrose, Komplexbildner wie beispielsweise Ethylendiamintetraessigsäure (C₁₀H₁₆N₂O₈) oder ihre Salze oder Nitrilotriessigsäure (C₆H₉NO₆) oder ihre Salze in einer Gesamtmenge im Bereich von 0,0001 bis 40 Gew.-%, vorzugsweise 0,0001 bis 10 Gew.-%, besonders bevorzugt 1 bis 5 Gew.-%, jeweils bezogen auf die Zusammensetzung Z.

Eine weitere Ausführungsform (III) der Zusammensetzungen Z, besonders bevorzugt enthaltend Natriumdithionit Z1, enthält die Verbindungen V ausgewählt aus der Gruppe bestehend aus: (a) Oxiden der Alkalimetalle Lithium, Natrium, Kalium, Rubidium, Cäsium, wie Li₂O, Na₂O, K₂O oder des Magnesiums wie MgO, vorzugsweise Lithiumoxid Li₂O, Natriumoxid Na₂O, Magnesiumoxid MgO; (b) Natriumtetrahydroborat (NaBH₄); (c) wasserfreies Kupfer(II)sulfat (Cu(SO₄)), Phosphorpentoxid und(d) basische Aminosäuren Arginin, Lysin, Histidin, vorzugsweise Arginin, Lysin, besonders bevorzugt Magnesiumoxid MgO, Natriumtetrahydroborat (NaBH₄) in einer Gesamtmenge im Bereich von 0,01 bis 0,9 Gew.-%, außer für NaBH₄ welches auch in einer Gesamtmenge im Bereich von 0,01 bis 5 Gew.-% enthalten sein kann.

Eine weitere Ausführungsform (IV) der Zusammensetzungen Z, besonders bevorzugt enthaltend Natriumdithionit Z1, stellt die Kombination der obigen Ausführungsformen (I) und/oder (II) mit der Ausführungsform (III) dar.

Die Zusammensetzung Z erhält man in der Regel, indem man die Komponenten Z1 und gegebenenfalls Z2, wie oben inklusive aller Ausführungsformen definiert, in festem und/oder trockenen Zustand oder in einem Lösungsmittel gelösten oder suspendierten Zustand mit mindestens einer der oben inklusive aller Ausführungsformen definierten Verbindungen V in festem und/oder trockenen Zustand oder in einem Lösungsmittel gelösten oder suspendierten Zustand in Berührung bringt.

Die Komponente Z1, besonders bevorzugt Natriumdithionit, kann mit den bekannten Verfahren, vorzugsweise mit dem Formiatverfahren, wie beispielsweise in Ullmann beschrieben, erhalten werden.

Lösungs- oder Suspendiermittel für die oben inklusive aller Ausführungsformen definierten Komponeten Z1, Z2 und V sind praktisch wasserfrei, vorzugsweise enthalten sie weniger als 1000 Gew.-ppm, besonders bevorzugt weniger als 100 Gew.-ppm Wasser.

Gut geeignete derartige Lösungsmittel sind üblicherweise jene, welche die Komponeten Z1, Z2 und V unter gewöhlichen Bedingungen, beispielsweise bei ca. 20 bis 50 °C chemisch nicht zersetzen und/oder solche, die mit Wasser mischbar sind, wie offenkettige C₂- bis C₁₀-Ether, beispielsweise Diethylether, cyclische C₄- bis C₁₀-Ether wie Tetrahydrofuran, aliphatische C₁- bis C₆-Alkohole, besonders bevorzugt Methanol, Ethanol, die Isomeren des Propanols sowie des Butanols, besonders bevorzugt Ethanol und Methanol, ganz besonders bevorzugt Methanol oder auch oder cycloaliphatische C₅- bis C₈-Alkohole, wie cyclo-Hexanol.

In einem gut geeigneten Verfahren kann der nach der Synthese des Dithionits Z1, vorzugsweise des via Formiatverfahrens gewonnenen Natriumdithionits Z1, erhältliche Filterkuchen, vorzugsweise möglichst von Wasser befreit, mit einer Suspension einer der oben inklusive aller Ausführungsformen definierten Verbindungen V, in gelöstem oder vorzugsweise suspendierten Zustand in Berührung gebracht werden. Dies geschieht üblicherweise bei Umgebungstemperatur, beispielsweise 15 bis 30 °C und Normaldruck von ca. 1 atm (abs.). Es können aber auch höhere oder tiefere Temperaturen und/oder Drücke angewendet werden.

In einem weiteren gut geeigneten Verfahren wird das nach der Synthese des Dithionits Z1, vorzugsweise des via Formiatverfahrens gewonnenen Natriumdithionits Z1, erhältliche noch lösungsmittelfeuchte Produkt mit üblichen Methoden, vorzugsweise auch unter vermindertem Druck, getrocknet und dann mit einer der oben inklusive aller Ausführungsformen definierten Verbindungen V, in festem und/oder trockenen Zustand in Berührung gebracht. Dies geschieht üblicherweise bei Umgebungstemperatur, beispielsweise 15 bis 30 °C und Normaldruck von ca. 1 atm (abs.). Es können aber auch höhere oder niedrigere Temperaturen und/oder Drücke angewendet werden.

Der feste Zustand ist hierin im Allgemeinen der Zustand, in welchem die oben inklusive aller Ausführungsformen definierten Verbindungen V nicht flüssig oder pastös sondern rieselfähig sind, wobei sie in der Regel als Pulver oder Granulat, zum Beispiel mit einem mittleren Teilchendurchmesser im Bereich von 0,1 bis 10 mm, vorliegen.

Der trockene Zustand ist im Allgemeinen der Zustand, in welchem die oben inklusive aller Ausführungsformen definierten Verbindungen V praktisch kein Suspendier- oder Lösungsmittel mehr enthalten, vorzugsweise enthalten sie in diesem Zustand weniger als 1 Gew.-% Lösungs- oder Suspendiermittel, beispielsweise organische Lösungsmittel wie Carbonsäuren, Alkohole und/oder Wasser.

Nach derzeitigem Kenntnisstand ist die Reihenfolge des Inberührungbringens der Komponenten Z1, gegebenenfalls Z2 und V nicht kritisch. So kann beispielsweise Komponente V zu Z1 und gegebenenfalls Z2 gegeben werden, aber auch die umgekehrte Reihenfolge ist möglich.

Das Inberührungbringen der Komponenten Z1, gegebenenfalls Z2 und V kann auf mannigfaltige und übliche Weise geschehen, wie schlichtes Zugeben einer oder mehrerer Komponenten aus Z1, Z2 und V zu der/den jeweiligen anderen Komponenten oder es kann ein Mischen in oder mit den hierfür üblicherweise verwendeten Vorrichtungen sein, zum Beispiel eine Rüttelrinne oder ein Mischer diversen Typs, was in der Regel zu einem gleichmäßigen Verteilen der Komponeten Z1, Z2 und V in der Zusammensetzung Z führt.

Das Inberührungbringen der Komponenten Z1, gegebenenfalls Z2 und V in Lösung oder Suspension kann ebenfalls auf mannigfaltige und übliche Weise geschehen, beispielsweise durch Aufsprühen oder in einem Filter.

Das Inberührungbringen der Komponenten Z1, gegebenenfalls Z2 und V kann aber auch darin bestehen, dass man die Komponente V, beispielsweise vor, während oder vorzugsweise nach Abfüllen der Komponenten Z1 und gegebenenfalls Z2 in Gefäße, zum Beispiel Transportgefäße wie Fässer, Intermediate Bulk Container (IBC), auf die Oberfläche der Mischung von Z1 und gegebenenfalls Z2 flächendeckend oder nur einen Teil der Oberfläche deckend schichtet. Die vorgenannte Schichtung der Komponente V kann dann vorzugsweise so geschehen, dass man die Schicht von V ohne größeren Aufwand wieder entfernen kann; hierzu kann beispielsweise zwischen der Mischung aus Z1 und gegebenfalls Z2 und der Schicht V ein gegenüber Z1, gegebenenfalls Z2 und V inertes Material platziert werden, welches gas- und feuchtigkeitsdurchlässig ist aber V von Z1 und gegebenenfalls Z2 wirksam separiert, beispielsweise eine poröse Metall- oder Polymerfolieo oder Papier, Vlies, Textil.

Das Inberührungbringen der Komponenten Z1, gegebenenfalls Z2 und V kann aber auch darin bestehen, dass man die Komponente V, nicht mit den restlichen Komponenten innig vermischt sondern getrennt von den restlichen Komponenten unterbringt, zum Beispiel abgefüllt in vorzugsweise kleinen Gebinden aus gegenüber Z1, gegebenenfalls Z2 und V inertem Material welches gas- und feuchtigkeitsdurchlässig ist, beispielsweise Beutel aus poröser Metall oder Polymerfolie, oder Papier, Vlies, Textil beispielsweise vor, während oder vorzugsweise nach Abfüllen der Komponenten Z1 und gegebenfalls Z2 in Gefäße, zum Beispiel Transportgefäße wie Fässer, Intermediate Bulk Container (IBC), in, unter oder auf der Mischung von Z1 und gegebebenfalls Z2 plaziert.

Gegenstand der vorliegenden Erfindung ist auch die Verwendung von mindestens einer der folgenden Verbindungen V ausgewählt aus der Gruppe bestehend aus: (a) Oxiden der Alkalimetalle Lithium, Natrium, Kalium, Rubidium, Cäsium, wie Li₂O, Na₂O, K₂O oder des Magnesiums wie MgO, (b) Natriumtetrahydroborat (NaBH₄), (c) wasserfreies Kupfer(II)sulfat (Cu(SO₄)), Phosphorpentoxid und (d) basische Aminosäuren Arginin, Lysin, Histidin zur Verminderung oder Verhinderung der Zersetzung einer Zusammensetzung Z enthaltend Z1 ein Salz der dithionigen Säure in einer Menge im Bereich von 50 bis 100 Gew.-% und gegebenenfalls Z2 ein Additiv ausgewählt aus der Gruppe bestehend aus Alkalimetallcarbonat, Erdalkalimetallcarbonat, Alkalimetall- oder Erdalklimetalltripolyphosphat (Na₅P₃O₁₀), Alkalimetall- oder Erdalkalimetallsulfit, -disulfit oder -sulfat, Dextrose und Komplexbildner in einer Gesamtmenge im Bereich von 0,0001 bis 40 Gew.-%.

Gegenstand der vorliegenden Erfindung ist auch die Verwendung der hierin inklusive aller Ausführungsformen definierten,Zusammensetzung Z zur Bleiche und Entfärbung von Zellstoff oder von Fasern zur Papierherstellung, von Holz, zur Färbung von Textilien oder zur Textilfarbenherstellung.

Das erfindungsgemäße Verfahren liefert eine erfindungsgemäße Zusammensetzung Z, welche sich durch signifikant geringere Zersetzungsneigung, bestimmt mit der in den Beispielen beschriebenen Methode, und daraus resultierende erhöhte Lager- und Transportstabilität auszeichnet. Auch nach längerer Lagerzeit, vorzugsweise bei Temperaturen unter 60°C, von beispielsweise 2 bis 4 Jahren der erfindungsgemäßen Zusammensetzung Z ist deren Wirkstoffgehalt an Z1 üblicherweise um höchsten 2 Gew.-% im Vergleich mit dem Ausgangsgehalt gesunken.

Die erfindungsgemäße Zusammensetzung Z eignet sich gut zur Verwendung in der Holzwerkstoff- oder Zellstoffindustrie, beispielsweise zur Bleiche, in der Papierindustrie und bei der Herstellung von Textilfarbstoffen oder dem Färben von Textilien.

### Beispiele

Die quantitative Bestimmung des Natiumdithionitgehalts geschah jeweils iodometrisch.

### Beispiel 1a:

45 g Natriumdithionit (Produkt Hydrosulfit F der BASF SE) enthaltend 2 bis 4 Gew.-% Natriumcarbonat (wasserfrei) wurden bei Raumtemperatur und geringer Luftfeuchtigkeit mit der Komponente V trocken als Feststoff, gemäß Angaben in der folgenden Tabelle 1, vermischt und im mit einem gegen Überdruck gesicherten Septum verschlossenen Ampullenfläschchen 7 Tage bei 65 °C getempert. Danach wurde der Natriumdithionitgehalt der getemperten Mischung bestimmt sowie deren Rieselfähigkeit durch Ausschütten der getemperten Mischung aus dem jeweiligen Ampullenfläschchen beurteilt. Der Rieselfähigkeit wurden Werte von 0 (völlig verbacken) bis 100 (sofort rieselfähig) zugeordnet. Die Gew.-%-Angaben in der Tabelle 1a beziehen sich auf die Gesamtmischung.

**Tabelle 1a**

| Komponente V | [Gew.-%] Komponente V | Natriumdithionit [Gew.-%] | Rieselfähigkeit |
|---|---|---|---|
| - | - | 60-72 | 20-40 |
| Magnesiumoxid MgO | 1 | 76 | 80 |
| Natriumoxid Na₂O | 0,5 | 82 | 100 |
| Lithiumoxid Li₂O | 1 | 78 | 90 |
| Lithiumoxid Li₂O | 0,5 | 77 | 90 |
| Natriumborhydrit NaBH₄ | 1 | 91 | 90 |
| Phosphorpentoxid | 1 | 82 | 90 |
| Kupfer(II)sulfat (CuSO₄) wasserfrei | 2 | 83 | 100 |
| Arginin | 1 | 84 | 95 |
| Lysin | 1 | 82 | 90 |

### Beispiel 1b

Es wurde wie in Beispiel 1a gearbeitet, allerdings enthielt das Natriumdithionit-Produkt weniger als 1 Gew.-% Natriumcarbonat (wasserfrei). Die Ergebnisse sind in Tabelle 1b dargestellt. Die Gew.-%-Angaben in der Tabelle 1b beziehen sich auf die Gesamtmischung.

**Tabelle 1b**

| Komponente V | [Gew.-%] Komponente V | Natriumdithionit [Gew.-%] | Rieselfähigkeit |
|---|---|---|---|
| Phosphorpentoxid | 1 | 80 | 90 |

### Beispiel 2:

50 g Natriumdithionit (Produkt Hydrosulfit F der BASF SE) enthaltend 0,8 Gew.-% Natriumcarbonat (wasserfrei) wurden bei Raumtemperatur mit der Komponente V trocken als Feststoff, gemäß Angaben in der folgenden Tabelle 4, vermischt und in 100 ml verschließbare Schottglasflaschen gefüllt. In den Flaschenhals wurde jeweils ein Kunststoffschwamm, getränkt mit 0,5 ml Wasser, eingesetzt und dann die Schottglasflasche mit dem Schraubdeckel dicht verschlossen und 7 Tage bei 30 °C (Trockenschrank) gelagert. Danach wurde der Natriumdithionitgehalt bestimmt sowie die Rieselfähigkeit durch Ausschütten der getemperten Mischung aus der jeweiligen Schottglasflasche beurteilt. Der Rieselfähigkeit wurden Werte von 0 (völlig verbacken) bis 100 (sofort rieselfähig) zugeordnet. Die Gew.-%-Angaben in der Tabelle 1b beziehen sich auf die Gesamtmischung.

**Tabelle 2**

| [Gew.-%] Komponente V | Komponente V | Natriumdithionit [Gew.-%] | Rieselfähigkeit |
|---|---|---|---|
| 1 | Phosphorpentoxid | 78 | 50 |
| 1 | L-Arginin | 86 | 80 |

## Patentansprüche

1. Verfahren zur Verminderung oder Verhinderung der Zersetzung einer Zusammensetzung Z enthaltend Z1 ein Salz der dithionigen Säure in einer Menge im Bereich von 50 bis 100 Gew.-% und gegebenenfalls Z2 ein Additiv ausgewählt aus der Gruppe bestehend aus Alkalimetallcarbonat, Erdalkalimetallcarbonat, Alkalimetall- oder Erdalklimetalltripolyphosphat (NasPₐO₁₀), Alkalimetall- oder Erdalkalimetallsulfit, -disulfit oder -sulfat, Dextrose und Komplexbildner in einer Gesamtmenge im Bereich von 0,0001 bis 40 Gew.-%, worin man die Komponenten Z1 und gegebenenfalls Z2 in festem und/oder trockenen oder in einem Lösungsmittel gelösten oder suspendierten Zustand mit mindestens einer der folgenden Verbindungen V in festem und/oder trockenen oder in einem Lösungsmittel gelösten oder suspendierten Zustand in Berührung bringt, wobei die Verbindungen V ausgewählt werden aus der Gruppe bestehend aus: (a) Oxiden der Alkalimetalle Lithium, Natrium, Kalium, Rubidium, Cäsium, oder des Magnesiums, (b) Natriumtetrahydroborat (NaBH₄), (c) wasserfreies Kupfer(II)sulfat (Cu(SO₄)), Phosphorpentoxid und (d) basische Aminosäuren Arginin, Lysin, Histidin, **dadurch gekennzeichnet, dass** das Lösungsmittel für Z1, gegebenenfalls Z2 und V praktisch wasserfrei ist.

2. Verfahren wie in Anspruch 1 definiert, **dadurch gekennzeichnet, dass** das Salz der dithionigen Säure Z1 Natriumdithionit ist.

3. Verfahren nach Anspruch 1 oder 2, **dadurch gekennzeichnet, dass** die Verbindung V in einer Gesamtmenge im Bereich von 0,01 bis 0,9 Gew.-%, bezogen auf die Zusammensetzung Z verwendet wird, außer für Natriumtetrahydroborat (NaBH₄) welches auch in einer Gesamtmenge im Bereich von 0,01 bis 5 Gew.-% enthalten sein kann.

4. Verwendung von mindestens einer der folgenden Verbindungen V ausgewählt aus der Gruppe bestehend aus: (a) Oxiden der Alkalimetalle Lithium, Natrium, Kalium, Rubidium, Cäsium, oder des Magnesiums; (b) Natriumtetrahydroborat (NaBH₄), (c) wasserfreies Kupfer(II)sulfat (Cu(SO₄)), Phosphorpentoxid und (d) Basische Aminosäuren Arginin, Lysin, Histidin zur Verminderung oder Verhinderung der Zersetzung einer Zusammensetzung Z enthaltend Z1 ein Salz der dithionigen Säure in einer Menge im Bereich von 50 bis 100 Gew.-% und gegebenenfalls Z2 ein Additiv ausgewählt aus der Gruppe bestehend aus Alkalimetallcarbonat, Erdalkalimetallcarbonat, Alkalimetall- oder Erdalklimetalltripolyphosphat (Na₅P₃O₁₀), Alkalimetall- oder Erdalkalimetallsulfit, -disulfit oder -sulfat, Dextrose und Komplexbildner in einer Gesamtmenge im Bereich von 0,0001 bis 40 Gew.-%..

5. Verwendung der in den Ansprüchen 1 bis 3 definierten Zusammensetzung Z zur Bleiche und Entfärbung von Zellstoff oder von Fasern zur Papierherstellung, von Holz, zur Färbung von Textilien oder zur Textilfarbenherstellung.

## Claims

1. A method for reducing or preventing the decomposition of a composition Z comprising Z1 a salt of dithionous acid in an amount ranging from 50 to 100 wt% and optionally Z2 an additive selected from the group consisting of alkali metal carbonate, alkaline earth metal carbonate, alkali metal or alkaline earth metal tripolyphosphate (Na5P3010), alkali metal or alkaline earth metal sulfite, disulfite or sulfate, dextrose and complexing agents in a combined amount ranging from 0.0001 to 40 wt%, which comprises contacting the components Z1 and optionally Z2 in the solid and/or dry or solvent-dissolved or -suspended state with at least one of the following compounds V in the solid and/or dry or solvent-dissolved or -suspended state, wherein the compounds V are selected from the group consisting of: (a) oxides of the alkali metals lithium, sodium, potassium, rubidium, cesium, or of magnesium, (b) sodium tetrahydroborate (NaBH4), (c) anhydrous copper(II) sulfate (Cu(SO₄)), phosphorus pentoxide and (d) basic amino acids arginine, lysine, histidine, wherein the solvent for Z1, optionally Z2 and V is practically water-free.

2. The method as defined in claim 1 wherein the salt of dithionous acid Z1 is sodium dithionite.

3. The method according to claim 1 or 2 wherein the compound V is used in a total amount ranging from 0.01 to 0.9 wt%, based on the composition Z, except for sodium tetrahydroborate (NaBH₄), which may also be present in a total amount ranging from 0.01 to 5 wt%.

4. The use of at least one of the following compounds V selected from the group consisting of: (a) oxides of the alkali metals lithium, sodium, potassium, rubidium, cesium, or of magnesium, (b) sodium tetrahydroborate (NaBH₄), (c) anhydrous copper (II) sulfate (Cu(SO₄)), phosphorus pentoxide and (d) basic amino acids arginine, lysine, histidine for reducing or preventing the decomposition of a composition Z comprising Z1 a salt of dithionous acid in an amount ranging from 50 to 100 wt% and optionally Z2 an additive selected from the group consisting of alkali metal carbonate, alkaline earth metal carbonate, alkali metal or alkaline earth metal tripolyphosphate (Na₅P₃O₁₀), alkali metal or alkaline earth metal sulfite, disulfite or sulfate, dextrose and complexing agents in a combined amount ranging from 0.0001 to 40 wt%.

5. The use of the Z composition defined in claims 1 to 3 for bleaching and decolorization of pulp or of fibers for papermaking, of wood, for dyeing of textiles or for textile color production.

## Revendications

1. Procédé pour la diminution ou l'empêchement de la décomposition d'une composition Z contenant Z1 un sel de l'acide dithioneux en une quantité dans la plage de 50 à 100 % en poids et éventuellement Z2 un additif choisi dans le groupe constitué par un carbonate de métal alcalin, un carbonate de métal alcalino-terreux, un tripolyphosphate (Na₅P₃O₁₀) de métal alcalin ou de métal alcalino-terreux, un sulfite de métal alcalin ou de métal alcalino-terreux, un disulfite de métal alcalin ou de métal alcalino-terreux ou un sulfate de métal alcalin ou de métal alcalino-terreux, le dextrose et un agent complexant en une quantité totale dans la plage de 0,0001 à 40 % en poids, dans lequel on met en contact les composants Z1 et éventuellement Z2 à l'état solide et/ou sec ou dissous ou en suspension dans un solvant avec au moins un des composés suivants V à l'état solide et/ou sec ou dissous ou en suspension dans un solvant, les composés V étant choisis dans le groupe constitué par : (a) des oxydes des métaux alcalins lithium, sodium, potassium, rubidium, césium, ou de magnésium, (b) le tétrahydroborate de sodium (NaBH₄), (c) le sulfate de cuivre(II) anhydre (Cu(SO₄)), le pentoxyde de phosphore et (d) les acides aminés basiques arginine, lysine, histidine, **caractérisé en ce que** le solvant pour Z1, éventuellement Z2 et V est pratiquement anhydre.

2. Procédé tel que défini dans la revendication 1, **caractérisé en ce que** le sel de l'acide dithioneux Z1 est le dithionite de sodium.

3. Procédé selon la revendication 1 ou 2, **caractérisé en ce que** le composé V est utilisé en une quantité totale dans la plage de 0,01 à 0,9 % en poids, par rapport à la composition Z, à l'exception du tétrahydroborate de sodium (NaBH₄) qui peut être également contenu en une quantité totale dans la plage de 0,01 à 5 % en poids.

4. Utilisation d'au moins un des composés suivants V choisi dans le groupe constitué par : (a) des oxydes des métaux alcalins lithium, sodium, potassium, rubidium, césium, ou de magnésium, (b) le tétrahydroborate de sodium (NaBH₄), (c) le sulfate de cuivre(II) anhydre (Cu(SO₄)), le pentoxyde de phosphore et (d) les acides aminés basiques arginine, lysine, histidine pour la diminution ou l'empêchement de la décomposition d'une composition Z contenant Z1 un sel de l'acide dithioneux en une quantité dans la plage de 50 à 100 % en poids et éventuellement Z2 un additif choisi dans le groupe constitué par un carbonate de métal alcalin, un carbonate de métal alcalino-terreux, un tripolyphosphate (Na₅P₃O₁₀) de métal alcalin ou de métal alcalino-terreux, un sulfite de métal alcalin ou de métal alcalino-terreux, un disulfite de métal alcalin ou de métal alcalino-terreux ou un sulfate de métal alcalin ou de métal alcalino-terreux, le dextrose et un agent complexant en une quantité totale dans la plage de 0,0001 à 40 % en poids.

5. Utilisation de la composition Z définie dans les revendications 1 à 3 pour le blanchiment et la décoloration de pâte à papier ou de fibres pour la fabrication du papier, de bois, pour la coloration de textiles ou pour la fabrication de colorants textiles.
